# EUROPÄISCHE PATENTSCHRIFT

(11) **EP 0 548 700 B1**
(45) Veröffentlichungstag und Bekanntmachung des Hinweises auf die Patenterteilung: **05.07.1995**
(21) Anmeldenummer: 92121103.3
(22) Anmeldetag: 11.12.1992
(51) Int. Cl.: F16D 65/12, B60B 17/02

(54) **Gummigefedertes Rad mit festmontierter Bremsscheibe**
Rubber sprung wheel with fixed brake disc
Roue amortie élastiquement avec disque de frein fixé

(30) Priorität: 27.12.1991 DE 4143067
(43) Veröffentlichungstag der Anmeldung: 30.06.1993
(73) Patentinhaber: Bergische Stahl-Industrie, D-42859 Remscheid (DE)
(72) Erfinder: Engelbracht, Hans, Wermelskirchen 1 (DE); Lehmann, Wolfgang, W-5630 Remscheid 1 (DE); Brinkmann, Andreas, W-5630 Remscheid 1 (DE)
(74) Vertreter: Dahlkamp, Heinrich-Leo

(56) Entgegenhaltungen:
- EP-A- 0 216 534
- DE-A- 3 240 636
- FR-A- 2 023 674
- US-A- 4 006 803

## Beschreibung

Die Erfindung betrifft ein gummigefedertes Schienenrad, mit einer oder zwei Radbremsscheiben, welche mit achsparallelen Schrauben am Rad befestigt sind, wobei das Rad Gummielemente besitzt, welche zwischen Radreifen und Radscheibenkörper angeordnet sind und welche mit einem mit Schrauben befestigten Klemmring eingespannt werden.

Zwei Probleme sind bei gummigefederten Schienenfahrzeugrädern vorhanden und bekannt und bisher ist noch keine einwandfreie Lösung dieser Probleme gefunden worden.
Einmal muss dafür gesorgt werden, dass die unter der Erwärmung beim Bremsen auftretende radiale Durchmesservergrösserung der Bremsscheiben in irgendeiner Weise aufgefangen wird. Dazu ist in der DE 32 40 636 A1 eine Lösung unter Verwendung von Gleitsteinen vorgeschlagen worden, deren Nachteil aber darin besteht, dass Gleitsteinvorrichtungen nur sehr aufwendig hergestellt werden können. Ausserdem liegen die beidseitig am Rad angeordneten Bremsscheiben unmittelbar am Klemmring und an der Radscheibe an, sodass die beim Bremsen entstehende Wärme direkt und aufschnellstem Weg an die Gummiteile weitergeleitet wird und diese recht schnell zerstört.

Der Erfindung liegt daher die Aufgabe zugrunde, ein gummigefedertes Schienenrad zu schaffen, das die Nachteile der bekannten Konstruktionen nicht besitzt und bei dem vor allem der Fluss der Bremswärme so geregelt wird, dass er nicht zur Zerstörung der Gummielemente führt.

Die Lösung der Aufgabe besteht darin, dass der Klemmring zusätzlich zu den Befestigungsbohrungen mind. zwei achsparallele Bohrungen besitzt, in denen lose jeweils eine Buchse liegt, die sich einerseits am Radkörper und andererseits an der Bremsscheibe abstützt und Radscheibe und Bremsscheibe mit achsparallelen in der Buchse liegenden Schrauben miteinander verbunden sind.

Vorteilhaft haben die im Klemmring liegenden Buchsen am Umfang zusätzlich eine Rille, die den trotz losem Sitz möglichen Flächenkontakt noch mehr erheblich reduziert.

Zweckmässig sind die die Radscheibe mit der Bremsscheibe verbindenden Schrauben Dehnschrauben.

Der Vorteil der erfindungsgemässen Anordnung der Bremsscheiben am Rad besteht darin, dass mit relativ einfachen Mitteln eine Konstruktion geschaffen ist, bei der einerseits die Durchmesservergrösserung der Bremsscheiben durch die Bremswärme voll aufgenommen werden kann und andererseits der Fluss der Bremswärme zum Rad und dort zu den Gummielementen weitgehend gehemmt wird, sodass eine Zerstörung der Gummielemente unterbleibt.

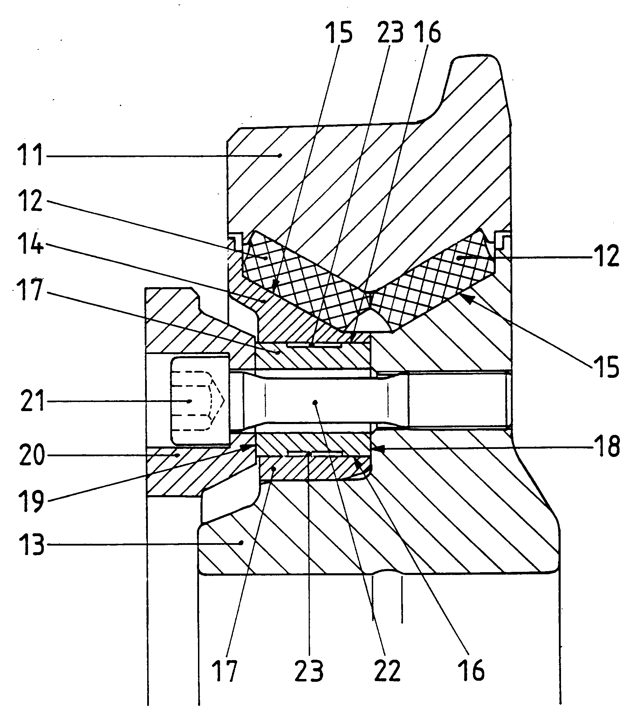

In der Zeichnung ist ein radialer und achsparalleler Schnitt durch das Schienenrad an der Stelle der Befestigungsschraube für die Bremsscheibe dargestellt und zwar ist der Radreifen 11 mittels Gummielementen 12, die bei diesem Radtyp V-förmig angeordnet sind, auf der Radscheibe 13 zentriert. Damit die Gummielemente 12 genügend vorgespannt werden können, ist ein Klemmring 14 vorgesehen, welcher mit (nicht dargestellten) Schrauben an der Radscheibe 13 angeschraubt ist und dabei mit der Fläche 15 die Gummielemente 12 verspannt. In dem Klemmring 14 sind achsparallele Bohrungen 16 vorgesehen, in denen lose jeweils eine Buchse 17 liegt, welche einerseits mit der Endfläche 18 an der Radscheibe 13 anliegt und andererseits mit der Endfläche 19 an der Bremsscheibe 20 anliegt. Mit der Schraube 21, welche eine Dehnschraube ist, wird die Bremsscheibe 20 am Rad 13 befestigt, wobei die Schraube 21 in der Buchse 17 liegt. Dabei hat der in der Buchse 17 liegende Teil 22 der Schraube 21 einen wesentlich geringeren Durchmesser, sodass sich die Bremsscheibe 20 ohne Zerstörung der Schraube 21 radial verschieben kann, was insbesondere bei der Durchmesservergrösserung der Bremsscheibe 20 durch die Bremswärme wichtig ist. Die umlaufende Rille 23 an der Buchse 17 reduziert den Flächenkontakt und damit den Wärmeübergang.

## Patentansprüche

1. Gummigefedertes Schienenrad mit einer oder zwei Radbremsscheiben (20), welche mit achsparallelen Schrauben (21) am Rad befestigt sind, wobei das Rad Gummielemente (12) besitzt, welche zwischen Radreifen (11) und Scheibenradkörper (13) zentriert sind und welche mit einem mit Schrauben befestigten Klemmring (14) eingespannt werden, dadurch gekennzeichnet, dass der Klemmring (14) zusätzlich zu den Befestigugsbohrungen mind. zwei achsparallele Bohrungen (16) besitzt, in denen lose jeweils eine Buchse (17) liegt, die sich einerseits mit einer Fläche (18) an der Radscheibe (13) und andererseits mit einer Fläche (19) an der Bremsscheibe (20) abstützt und Radscheibe (13) und Bremsscheibe (20) mit achsparallelen in der Buchse (17) liegenden Schrauben (21) miteinander verbunden sind.

2. Gummigefedertes Schienenrad nach Anspruch 1, dadurch gekennzeichnet, dass die die Radscheibe (13) mit der Bremsscheibe (20) verbindenden Schrauben (21) Dehnschrauben (22) sind.

3. Gummigefedertes Schienenrad nach Anspruch 1 oder 2, dadurch gekennzeichnet, dass die Buchse (17) mit Spiel in der Bohrung (16) liegt.

4. Gummigefedertes Schienenrad nach einem der Ansprüche 1 bis 3, dadurch gekennzeichnet, dass die Buchse (17) auf der Aussenseite eine Rille (23) trägt.

5. Gummigefedertes Schienenrad nach einem der Ansprüche 1 bis 4, dadurch gekennzeichnet, dass die Buchse (17) aus einem Werkstoff mit ausreichender Festigkeit, aber schlechten Wärmeleitungseigenschaften besteht.

## Claims

1. A rubber-sprung rail wheel comprising one or two wheel brake discs (20) which are attached to the wheel by way of axis-parallel bolts (21), and the wheel having rubber elements (12), which are centred between wheel rim (11) and disc-wheel portion (13) and clamped by way of a clamping ring (14) which is mounted by bolts, **characterized in that** the clamping ring (14) has, in addition to the fixing bores, at least two axis-parallel bores (16) with a respective bush (17) loosely placed therein which is supported on the one hand, by one surface (18) against the wheel disc (13) and, on the other hand, by a surface (19) against the brake disc (20), and wheel disc (13) and brake disc (20) are interconnected by way of bolts (21) which are placed axis-parallel in the bush (17).

2. A rubber-sprung rail wheel according to claim 1, **characterized in that** the bolts (21) which connect the wheel disc (13) to the brake disc (20) are waisted bolts (22).

3. A rubber-sprung rail wheel according to claim 1 or 2, **characterized in that** the bush (17) is accommodated with a play in the bore (16).

4. A rubber-sprung rail wheel according to one of claims 1 to 3, **characterized in that** the bush (17) has an external groove (23).

5. A rubber-sprung rail wheel according to one of claims 1 to 4, **characterized in that** the bush (17) is composed of a material of sufficient rigidity but poor heat-ducting properties.

## Revendications

1. Roue amortie élastiquement avec un ou deux disques de frein (20) fixés sur la roue au moyen de vis parallèles à l'essieu (21), la roue étant pourvue d'éléments élastiques (12) qui sont centrés entre les pneus de roue (11) et le corps de la roue à disque (13) et tendus avec une bague de serrage (14) fixée au moyen de vis caractérisée en ce que la bague de serrage (14) est pourvue en plus des alésages de fixation d'au moins deux alésages (16) parallèles à l'essieu dans chacun desquels repose une douille (17) mobile qui appuie d'une part avec une surface (18) sur le disque de roue (13) et d'autre part avec une surface (19) sur le disque de frein (20) et que le disque de roue (13) et le disque de frein (20) sont reliés l'un à l'autre au moyen de vis (21) parallèles à l'essieu et reposant dans la douille (17).

2. Roue amortie élastiquement selon la revendication 1 caractérisée en ce que les vis (21) reliant le disque de roue (13) au disque de frein (20) sont des vis élastiques (22).

3. Roue amortie élastiquement selon la revendication 1 ou 2 caractérisée en ce que la douille (17) repose dans l'alésage (16) en ayant du jeu.

4. Roue amortie élastiquement selon l'une des revendications 1 à 3 caractérisée en ce que la douille (17) possède une rainure (23) sur la face extérieure.

5. Roue amortie élastiquement selon l'une des revendications 1 à 4 caractérisée en ce que le matériau de la douille (17) est un matériau avec une résistance suffisante mais possédant de mauvaises qualités de conductibilité thermique.
